# EUROPEAN PATENT APPLICATION

(11) **EP 3 754 569 A1**
(43) Date of publication of application: **23.12.2020**
(21) Application number: 19180595.1
(22) Date of filing: 17.06.2019
(51) Int. Cl.: G06Q 10/04, G06Q 10/02, G06Q 50/30

(54) **METHOD AND DEVICE FOR PREDICTING AND AVOIDING CONGESTION OF TRANSPORTATION INFRASTRUCTURE**

(71) Applicant: Hitachi, Ltd., Tokyo 100-8280 (JP)
(72) Inventor: MOCHIZUKI, Tomoyuki, London, EC2Y 5AJ (GB); SATO, Yutaka, London, EC2Y 5AJ (GB)
(74) Representative: MERH-IP Matias Erny Reichl Hoffmann Patentanwälte PartG mbB

(57) **Abstract**

The present invention relates to a transportation control system, a system server 1 and a method for predicting and avoiding congestion in public transport. The system server 1 of the transportation control system is connected to a plurality of mobile devices 4a, 4b, 4c via a network and predicts congestion data based on route selection data received from said plurality of mobile devices 4a, 4b, 4c. This allows to provide congestion information and alternative route options even before a congestion occurs. Furthermore, due to the plurality of route selection data involved in the prediction, congestions can be predicted with high accuracy.

## Description

The present invention relates to a transportation control system, a system server and a method for predicting and avoiding congestion in public transport.

Dealing with delay in public transport is still a challenge for passengers although timetables and booking options for almost all public transportation means are meanwhile available online so that passengers can reschedule their routes on their smartphones. However, commonly used traffic information systems merely provide information about alternative routes and do not give any information about the occupation of the transportation means on the suggested routes. As a result, many passengers may choose the same routes which may lead to overcrowding and additional delay.

Patent Literature 1: US 2013/0066659 A1

Patent Literature 1 describes a travel arrangement system for providing alternative travel arrangements for flights that can be accessed by a passenger using a mobile device. In case a flight is delayed the system provides an alternative flight to a passenger and updates the travel itinerary based on the passenger's selection. Since the maximum number of passengers using a flight is predetermined by the maximum number of seats, rebooking of flights cannot cause overcrowding and is easy to handle, since the number of passengers is well known before departure. Other transportation means, for example trains, can transport more passengers than seats available in the transportation means and not all tickets are booked in advance. Therefore, additional information about passenger's route decisions in case of rescheduling are needed to avoid congestions.

An object of the invention is to realize a transportation control system, a system server and a method for predicting and providing congestion data of alternative transportation infrastructure in case of a delay of a transportation means to avoid congestion and delay in the alternative transportation infrastructure.

This object is solved by the invention according to the independent claims. Further preferred developments are described by the dependent claims.

According to an aspect, the invention may include a transportation control system which may comprise at least one system server for predicting congestion data of transportation infrastructure and a plurality of mobile devices, such as smartphones, mobile computers and the like, connected to the system server via a network, such as the internet.

The system server may generate predicted congestion data of the transportation infrastructure based on previously received route selection data from the plurality of mobile devices, when the system server receives route selection data from a mobile device and may provide updated predicted congestion data to the mobile devices. In other words, the system server may predict congestion data based on previously received route selection data in any case a mobile device transmits route selection data to the system server regardless if the mobile device has already been connected to the system sever or if it is just connecting when transmitting the data. After predicting said congestion data initiated by an additionally transmitted route selection data, updated predicted congestion data may be provided to the mobile devices. This means that actual information about changes in congestions are provided to the mobile devices in real time.

The term "transportation infrastructure" may include transportation means such as trains, busses, taxis and plans as well as properties along the transportation network such as platforms and recreation facilities like shops, restaurants, gyms and so on.

Congestion data may relate to a utilized capacity of the transportation infrastructure. In other words, congestion data shall be understood as data including information about the occupation ratio of a transportation infrastructure. For example, if a transportation means such as a train provides 600 seats and 300 of them are occupied, the congestion rate of the train is 50%. The congestion rate of recreational facilities may be calculated by defining a predetermined area per occupant so that the maximum number of occupants can be determined by multiplying the available area of a recreational facility with the predetermined area per occupant. The congestion data may then be determined by dividing the actual occupants by the maximum number of occupants. The predetermined area per occupant may be in the range of 4 m² to 6 m².

Further, the system server of the transportation control system may transmit route option data to the mobile devices based on the predicted congestion data. This means, if the system server provides an alternative route options to a mobile device, it may consider the predicted congestion data when determine different route options. For example, if an alternative transportation means is running from A to B but said transportation means is fully occupied, the system server may either not suggest said transportation means at all or provide additional information about the congestion rate thereof to the mobile device.

Therefore, the quality of the determined route option data is improved by considering the predicted congestion rate. The system server may transmit the route option data to the mobile devices, for example, because of a delay on the original route which is determined by the system server or in response to a request transmitted from the mobile device to the system server. The route option data may include proposed routes, stations along the proposed routes, transportation means running on the proposed route and timetables connected to the proposed transportation means. Additionally, further information about travelling conditions may be incorporated in the route option data like the congestion rate of the suggested transportation means and available recreation facilities located along the proposed routes.

Furthermore, the system server of the transportation control system may transmit updated route option data based on updated predicted congestion data to the mobile devices. This means that the system server may change route option data transmitted to a mobile device in case the predicted congestion data changes, for example, caused by additional route selection data received from additional mobile devices. In such a case the system server may transmit updated route option data to the mobile devices as long as the departure time of the previous route option has not been reached.

After receiving route option data, the mobile devices connected to the system server via a network may select one transmitted route option as the route selection data. The selection may be performed on the basis of an input on the user interface of the mobile device or automatically. An automatic selection may be carried out by the mobile device in case it has not received an input after a predetermined time. The predetermined time may be in the range of 5 min to 60 min depending on the timetables included in the route option data. Automatically selecting the most preferable option for a passenger may consider the information about the traveling conditions included in the route option data. While in a first step the automatic selection may choose the route option resulting in the shortest time delay, it may in a further step consider additional conditions such as the congestions rate of the different transportation means included in the proposed route options or the possibility to visit a recreational facility while waiting on the next transportation means.

The system server of the transportation control system may store parameters of the received route selection data in a transportation control database. Parameters of the route selection data may be the selected routes, the stations included in the selected routes, the transportation means running on the selected route, the recreation facilities located along the selected route and the departure and arrival times of every route section. Based on said parameters selected by the mobile devices and stored in the transportation database, the system server may predict the congestion data of the related transportation infrastructure. The system server may receive route selection data from a plurality of mobile devices which may contribute to the control database as long as the arrival time stored in the respective route selection data has not reached. This leads to a large amount of data which improves the accuracy of the congestion prediction.

The system server of the transportation control system may predict the congestion data of a single transportation infrastructure in real time by counting the mobile devices selecting the route option including said transportation infrastructure, and dividing the total amount of counted mobile devices by a total capacity of said transportation infrastructure divided by a mobile device user ratio. Here, "mobile devices selecting the route option" shall be understood as mobile devices which have received the route option data and are still in the process of decision making as well as the mobile devices which have been already selected a route option. Considering a route option as potential route selection data already during the decision-making process allows for predicting congestions in real time at a very early state. Route options transmitted to the system server as route selection data may be taken into account by the congestion prediction during the planned duration of stay according to the route selection data. The total capacity of a transportation infrastructure may be the maximum number of seats in a train, bus and/or plane or the maximum number of occupants in a recreation facility as described above. A mobile user ratio may be the percentage of passengers using a mobile device.

The system server of the transportation control system may adjust the predicted congestion data by using position data of the mobile devices. Assuming the agreement of the user, the position data of the mobiles devices may be used to double-check if passengers have really chosen the selected route option transmitted as route selection data to the system server. This may be beneficial for improving the accuracy of the congestion prediction.

The transportation control system may further comprise at least one traffic management system connected to the at least one system server via the network, wherein the traffic management system may transmit data including information about transportation network, timetables and position data of transportation means to the system server. The traffic management system can be an administrative system/database that may organize transportation means belonging to a transportation organization. There may be more than one traffic management system connected to the system server in case the system server receives data from different transportation organizations providing different transportation infrastructure.

The system server of the transportation control system may calculate delay of the transportations means when receiving position data of the transportation means from the traffic management system and update the previously received timetables considering the calculated delay of the transportation means. In other words, the system server may determine a delay of a transportation means based on actual position data thereof that may be sent by the traffic management system regularly, for example, every one to ten minutes. Comparing the currently received position of a transportation means with the timetable stored in the transportation control database, the system server 1 may determine a possible delay and estimate an updated timetable.

Further, the transportation control system may further comprise at least one reservation system connected to the at least one system server via the network. The reservation system may be an administrative system to arrange the booking/rebooking of all transportation infrastructure assessable via the transportation control system including transportation means and further infrastructure such as recreational facilities or the like. More than one reservation system may be connected to the system server, in case every transportation organization provides a separate reservation system. It may be also possible that one general reservation system performs the booking of the transportation infrastructure of different transportation organizations.

The reservation system may book itineraries including capacity of transportation infrastructure and transmit itinerary data to the system server. The itinerary data may comprise information about a planned route of a passenger, booked transportation means and/or further booked transportation infrastructure and may include access data of the passenger's mobile device, like the IP address.

Furthermore, the system server of the transportation control system may update the itinerary data based on the route selection data received from the mobile devices and transmit updated itinerary data to the reservation system. Subsequently, the reservation system may rebook itineraries based on said updated itinerary data.

Further, the invention may include a system server for predicting congestion data of transportation infrastructure which may comprise a data receiving portion for receiving route selection data from a plurality of mobile via a network, a data generating portion for generating congestion data of the transportation infrastructure based on said route selection data, a data sending portion for sending the congestion data to a plurality of mobile devices. The data generating portion may generate the congestion data based on previously received route selection data from the plurality of mobile devices and the data sending portion may provide updated predicted congestion data to the mobile devices. This means that after the data generating portion may have generated the congestion data initiated by an additionally transmitted route selection data, the data sending portion may provide updated predicted congestion data to the mobile devices. Consequently, actual information about changes in congestions are provided to the mobile devices in real time.

Furthermore, the data sending portion may transmit route option data to the mobile devices based on the congestion data predicted by the data generating portion and may transmit updated route option data to the mobile devices based on updated congestion data predicted by the data generating portion. This means that in case the data generating portion changes the predicted congestion data, for example, caused by additional route selection data received from additional mobile devices, the data sending portion may transmit updated route option data to the mobile devices as long as the departure time of the previous route option has not been reached.

Moreover, the data generating portion may predict the congestion data of a single transportation infrastructure in real time by counting the mobile devices selecting the route option including said transportation infrastructure, and dividing the total amount of counted mobile devices by a total capacity of said transportation infrastructure divided by a mobile device user ratio. Here, "mobile devices selecting the route option" shall be understood as mobile devices which have received the route option data and are still in the process of decision making as well as the mobile devices which have been already selected a route option. Route options transmitted to the system server as route selection data may be taken into account by the data generating portion during the planned duration of stay according to the route selection data. The total capacity of a transportation infrastructure may be the maximum number of seats in a train, bus and/or plane or the maximum number of occupants in a recreation facility as described above. A mobile user ratio may be the percentage of passengers using a mobile device.

According to an aspect, the invention may include a transportation control method comprising the following steps:
- generating predicted congestion data of transportation infrastructure based on previous route selection data received from a plurality of mobile devices by at least one system server, when the system server receives route selection data from a mobile device; and
- providing updated predicted congestion data to the mobile devices by the system server.

The method may further comprise the steps:
- transmitting route option data to the mobile devices by the system server based on the predicted congestion data;
- transmitting updated route option data based on the updated predicted congestion data to the mobile devices;
- selecting one transmitted route option as the route selection data by the mobile devices (4a, 4b, 4c).

Summarizing, the invention provides a transportation control system which can predict and avoid congestions in public transport. The control system may comprise a system server that can predict congestion data of transportation means by using route selection data received from a plurality of mobile devices connected to the system server via a network. This allows to provide congestion information and alternative route options even before a congestion occurs. Furthermore, due to the plurality of route selection data involved in the prediction, congestions can be predicted with high accuracy.

In the following the invention will be further explained based on at least one preferential example of the invention with reference to the attached exemplary drawings, wherein:
- Figure 1: depicts a schematic diagram of a transportation control system;
- Figure 2: shows schematically a possible structure of a transportation control database;
- Figure 3: depicts a flow chart which describes an example for predicting congestion data based on previously received route selection data;
- Figures 4a and 4b: show schematically an example of a transportation network;
- Figures 5a and 5b: show examples for planned and estimated timetables of transportation means;
- Figures 6a and 6b: depict an example as to how to select a route alternative in case of a delay of a transportation means;
- Figures 7a to 7c: depict examples for plans including information about actual positions of transportation means, locations of recreation facilities and a calculation of congestion rates of transportation infrastructure;
- Figure 8: depicts examples for selecting a route alternative; and
- Figures 9a and 9b: show examples for a planned and an estimated itinerary.

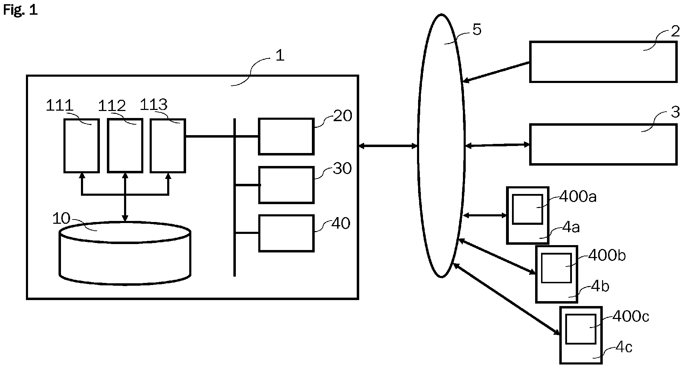

Figure 1 depicts a schematic diagram of an exemplary transportation control system. The illustrated transport control system includes a system server 1 comprising typical server components as a central processing unit (CPU) 20, a memory 30 and a network interface 40. Further, a data generating portion 111, a data receiving portion 112 and a data sending portion 113 are included in the system server 1. Additionally, the system server 1 further comprises a transportation control database 10 which may include all relevant data to estimate congestion data and provide route option data. The data generating portion 111 postprocesses data received by the data receiving portion 112 and generates new/updated data using the received information. The generated data may, for example, include information about estimated congestions and alternative route options and may be sent by the data sending portion 113 via a network 5 to different clients, such as the mobile devices 4a, 4b, 4c. Each mobile device 4a, 4b, 4c may provide a user interface 400a, 400b, 400c to show information and receive commands. Besides the mobile devices 4a, 4b, 4c, at least one traffic management system 2 and at least one reservation system 3 may be connected via the network 5 to the system server 1. The traffic management system 2 may be an administrative system to organize transportation means belonging to a transportation company/organization. There may be more than one traffic management system 2 connected to the system server 1, in case the system server 1 receives information from different transportation organizations providing different transportation infrastructure. For example, one traffic management system may belong to an airline and a second traffic management system may belong to a railway company. The traffic management system 2 may transmit, e.g., the transportation network plan, planed timetables and updated positions of transportation means to the system server 1. The reservation system 2 may also be an administrative system to arrange the booking/rebooking of all transportation infrastructure assessable via the transportation control system including transportation means and further infrastructure such as recreational facilities or the like. More than one reservation system 2 may be connected to the system server, in case every transportation organization provides a separate reservation system 2. It may be also possible that one general reservation system 2 performs the booking of the transportation infrastructure of different transportation organizations.

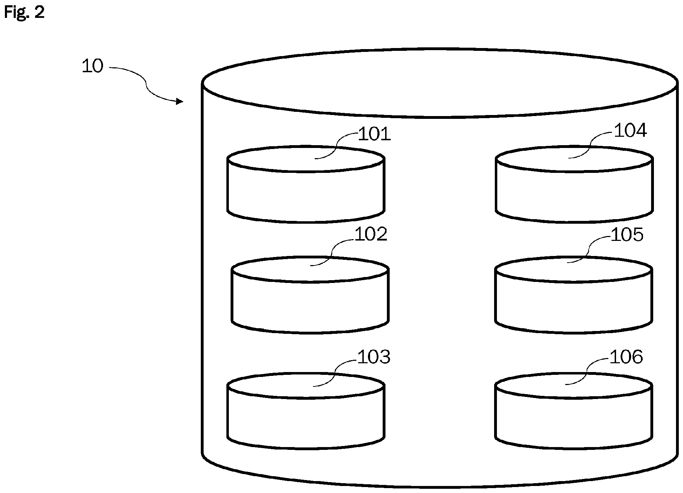

In Figure 2 an exemplary structure of a transportation control database 10 included in the system server 1 is shown. The transportation control database 10 comprises a transportation network data section 101, a transportation timetable data section 102 and a transportation position data section 103. The information stored in these data sections may be received from the traffic management system 2 and regularly updated by the latter. While the transportation network data must only be updated when constructional measures at the transportation network are carried out, the transportation timetable data may be adjusted more frequently, namely whenever a transportation means is delayed for more than a predetermined time. The predetermined delay time for initiating a timetable update may be in the rage of 1 min to 15 min. The system server 1 may detect a delay based on actual position data of transportation means that may be sent by the traffic management system 2 on a regular basis, for example, every one to ten minutes. Comparing the currently received position of a transportation means with the timetable stored in the transportation timetable data section 102, the system server 1 may determine a possible delay and estimate an updated timetable. Subsequently, the estimated updated timetable may be stored in the transportation timetable data section 102. Therefore, the transportation control database 10 has always actual information about forthcoming delay of transportation means at the next station.

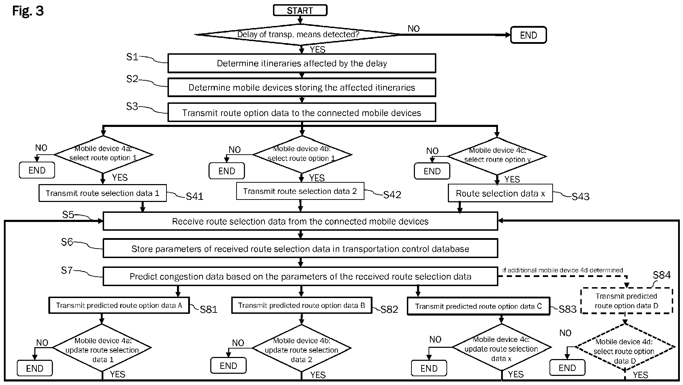

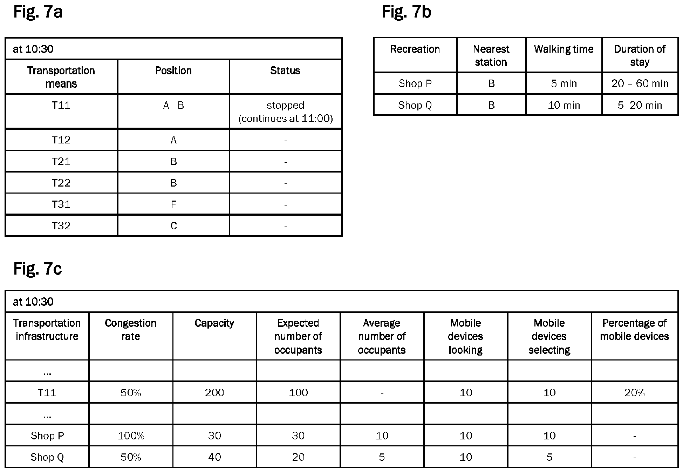

The transportation control database 10 further comprises a recreation data section 104, a congestion data section 105 and an itinerary data section 106. The recreation data section 104 may provide a detailed description regarding every recreation facility available in the transportation infrastructure. Said description may comprise information about the type of recreation, the address of the property, the distance to the next transportation station, the opening hours, the average number of occupants usually visiting at a certain opening hour and the average time an occupant usually stays in the property. In the congestion data section 105 congestion data based on a plurality of previously received route selection data may be saved. The big data amount stored in said data section allows for predicting congestion data with high accuracy. The calculation/estimation of the congestion data will be described in connection with the Figs. 3 and 7c.

The itinerary data section 106 may comprise the itinerary data of all passengers using any of the transportation infrastructure related to the transportation control system. These itinerary data may be created by the reservation system 2 and transmitted to the system server 1. It may comprise information about the planned route of a passenger, the booked transportation means and/or further booked transportation infrastructure as well as access data to the passenger's mobile device 4a, 4b, 4c, like the IP address.

Figure 3 depicts an example for a series of steps to be carried out when predicting congestion data based on previously received route selection data.

If a delay of a transportation means is detected, the system server 1 may determine the itineraries affected by said delay based on the itinerary data stored in the itinerary data section 106 (S1). Said itinerary data may further allow to determine the mobile devices 4a, 4b, 4c storing the affected itineraries according to step S2. Subsequently, route option data stored in the congestion data section 105 may be transmitted to said mobile devices 4a, 4b, 4c (S3). As long as no predicted congestion data is available, the transmitted route option data may merely include information about alternative routes without providing information about the congestion rate of the related transportation means. In case a mobile devise 4a, 4b, 4c does not select a route option, the process may be completed for said mobile device 4a, 4b, 4c and no route selection data therefrom may be transmitted to the system server 1. However, if the mobile devices 4a, 4b, 4c select a route option (S41, S42, S43), the data receiving portion 112 of the system server 1 may receive the route selection data based on the selected route option of each connected mobile device (S5). Subsequently, the system server 1 may store the parameters included in the transmitted route selection data in the transportation control database 10, more precisely in the congestion data section 105 thereof. Parameters of the route selection data may be, for example, the selected routes, the stations included in the selected routes, the transportation means running on the selected route, the recreation facilities located along the selected route and the departure and arrival times of every route section. Based on said parameters, the system server 1 may predict the congestion data of the transportation infrastructure affected by the previously detected delay (S7). Considering the predicted congestion data, the data generating portion 111 of the system server 1 may create predicted route option data A, B, C which may be transmitted to the respective mobile devices 4a, 4b, 4c by the data sending portion 113 (S81, S82, S83). If an additional mobile device 4d storing an itinerary related to the detected delay is determined, the data sending portion 113 may transmit a further predicted route option data D to said mobile device (S84). The predicted route option data A, B, C may be identical or different to the route option data transmitted in step S3. If the transportation means related to the originally transmitted route options do not show high congestion rates, the original route options may be maintained, and the mobile devices 4a, 4b, 4c may not update their route selection data. If the predicted congestion data suggests different route options, the mobile devices 4a, 4b, 4c may either select the predicted route options or reject it. In the latter case, the procedure may be completed for the related mobile device 4a, 4b, 4c and no updated route selection data may be sent to the system server 1. However, if a mobile device 4a, 4b, 4c selects a predicted route option different from the original route option, updated route selection data may be sent to the system server 1 which may replace the route selection data transmitted in step S41, S42, S43. In this case the steps S5, S6, S7 and S81, S82, S83 may be repeated until the departure time of the selected route option is reached. The parameters of the last updated route selection data before departure may be stored in the congestion data section 105 and used for congestion prediction of the related transportation infrastructure until the arrival time of the selected route option is reached. Since a plurality of mobile devices 4a, 4b, 4c may be connected to the system server 1, the latter may receive a big data amount of route selection data which allows for precisely predicting congestion data and offering reliable route alternatives.

The following figures depict one particular example of a traffic disruption, in order to introduce the different measures necessary to provide suitable route alternatives.

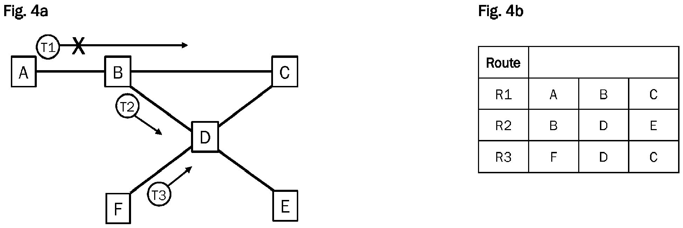

In this context, Fig. 4a shows schematically an exemplary transportation network with the stations A to F on which the transportation means T1 to T3 are running, wherein the depicted arrows indicate the direction of the transportation means T1 to T3. The X on the arrow indicating the direction of T1 illustrates a traffic disruption on the route from station A to station B. Fig. 4b depicts a table showing the different routes R1 to R3 and the related stations.

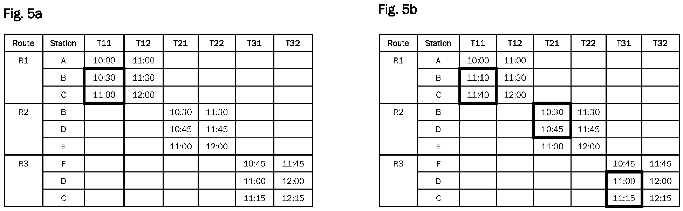

Figs. 5a and 5b present the related timetables showing the effect of the traffic disruption indicated in Fig. 4a on the subsequent transportation means. According to the planned timetable illustrated in Fig. 5a, the transportation means T11 leaves station B at 10:30 and arrives at station C at 11:00. Due to the disruption, transportation means T11 is delayed and leaves station B only at 11:10 so that it arrives at station C only at 11:40 (see estimated timetable in Fig. 5b). In order to shorten the delay time, it may be advantageous to choose transportation means T21 on station B at 10:30, which arrives at station D at 10:45. Then, the transportation means T31 may be taken which leaves station D at 11:00 and arrives at the desired station C at 11:15. This route alternative may be apt to shorten the time delay by 25 minutes.

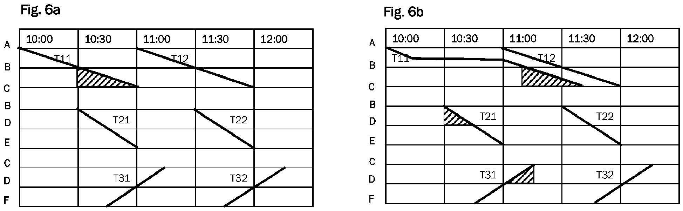

The Figs. 6a and 6b depict the previously described steps of selecting a route alternative in case of a delay in a graphical way, in order to further illustrate the route options, the related transportation means and the saved delay time. According to the previously described Figs 5a and 5b, Fig. 6a depicts the planned timetable in which the affected route section is marked, and Fig. 6b depicts the estimated timetable in which the delay and the route alternatives are plotted.

The table in Fig. 7a informs about actual positions of transportation means at 10:30, wherein the traffic disruption of T11 is depicted which occurred between the stations A and B and will be remedied at 11:00.

Fig. 7b depicts a table in which possible recreation facilities are listed that are achievable by walk from station B, so that passengers affected by the delay due to the traffic disruption can choose this recreation facilities for spending the waiting time.

Fig. 7c shows the calculation of congestion rates at 10:30 for transportation infrastructure affected by the traffic disruption, namely the transportation means T11 and the shops P and Q. The congestion rate of T11 may be calculated firstly by adding the 10 mobile devices which are still in the decision-making process (depicted as "looking") and the 10 mobile devices which are selecting a route option. The sum of related mobile devices may than be divided by the 20% percentage of mobile devices, namely the 20% of the passengers of T11 expected to use a mobile device. This leads to 100 expected passengers occupying T11. The congestion rate of T11 may finally be calculated by dividing the expected 100 occupants by the total capacity of 200 seats which results in a congestion rate of 50%. For calculating the congestion rate of a recreation facility such as the shops P and Q, the number of expected occupants may be estimated by adding the mobile devices which are still in the decision-making process (depicted as "looking"), the mobile devices which are selecting a shop and the average number of occupants usually visiting the shop at 10:30. This leads to 30 expected occupants in shop P and 20 expected occupants in shop Q. Since the capacity of shop P is 30 occupants and the capacity of shop Q is 40 occupants, the related congestion rates are 100% and 50%.

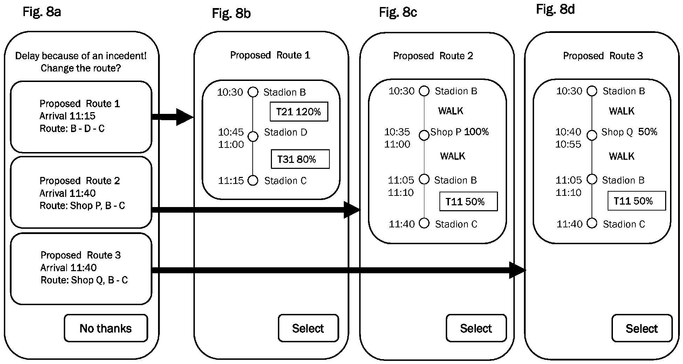

Figure 8a to 8b depict an example for selecting a route alternative on a mobile device. Fig. 8a depicts the main user interface, which informs about an incident and provides three different route alternatives. Route 1 proposes to go from station B via station D to station C arriving at station C at 11:15. In the routes 2 and 3 it is proposed to spend recreational time in shop P and Q respectively, arriving at station C at 11:40. The user interface allows for selecting one of the proposed route options or to reject the offer. As described above, it may be also possible that the mobile device performs an automatic selection.

As depicted in the Figs. 8b to 8d, further details about the travelling conditions of the offered route proposals are provided in case of selecting a route option. The submenu informs about the congestion rate of the related transportation means T11, T21 and T31 as well as the shops P and Q. It is visible that route 1, even if it provides the shortest delay time, has the disadvantage that 120% congestion rate in transportation means T21 is expected so that not every passenger can be seated. Further it is recognizable that the walking time to shop P, which is proposed to visit in route 2, is 5 min shorter than the walking time to shop Q proposed in route 3. However, shop P is expected to be more crowded than shop Q, since the congestion rate of shop P is predicted to be 100% whereas the congestion rate of shop Q is predicted to be only 50%. It becomes obvious from the Figs. 8b to 8d that several parameters have to be considered by selection route options. The system server 1 of the transportation control system may provide calculation methods to perform an automatic selection taking the explained parameters into account to offer the most preferable route option to the passenger. These calculation methods may, for example, consider further information about passenger's preferences stored on the mobile device. Besides the shown user interfaces, it may be possible to display further information on the mobile device user interfaces 400a, 400b, 400c, for example, the actual congestion rates of selected transportation means or congestion rate curves over time for different transportation infrastructure.

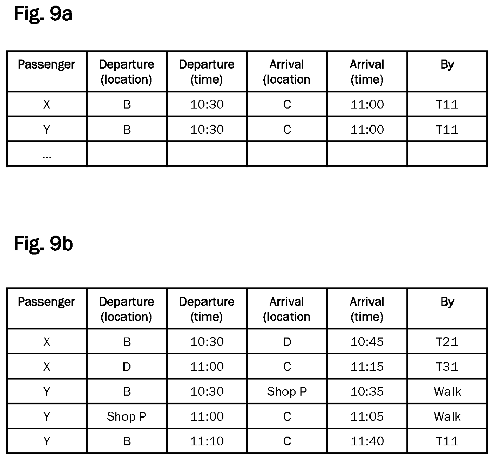

Figures 9a and 9b show examples for a planned and an estimated itinerary of the passengers X and Y, respectively. Originally, as shown in Fig. 9a, the passengers-X and Y departs from station B at 10:30 by the transportation means-T11 and arrive at station C at 11:00. Since-T11 is delayed by 40 min (see also Figs. 5a and 5b), the system server 1 may propose alternative route options to both passenger-X and Y. While passenger-X selects another route, which leads him via station D to station C, passenger Y decides to visit shop P, which is available by a 5 minutes' walk, to spend the waiting time therein (see Fig.9b).

While the above describes a particular order of operations performed by certain examples of the invention, it should be understood that such order is exemplary, as alternative examples may perform the operations in a different order, combine certain operations, overlap certain operations, or the like.

Features of the different embodiments, aspects and examples, which are described herein, and which are shown by the Figures, may be combined either in part or in whole. The herein described invention shall also entail these combinations.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Again summarizing, the invention provides a transportation control system, a system server and a method which can predict and avoid congestion in public transport. The system server included in the transportation control system can predict congestion data of transportation means by using route selection data received from a plurality of mobile devices connected to the system server via a network. This allows to provide congestion information and alternative route options even before a congestion occurs. Furthermore, due to the plurality of route selection data involved in the prediction, congestions can be predicted with high accuracy.

### Reference sign list

- 1: system server
- 2: traffic management system
- 3: reservation system
- 4a, 4b, 4c: mobile devices
- 5: network
- 10: transportation control database
- 20: central processing unit (CPU)
- 30: memory
- 40: network interface
- 101: transportation network data section
- 102: transportation timetable data section
- 103: transportation position data section
- 104: recreation data section
- 105: congestion data section
- 106: itinerary data section
- 400a, 400b, 400c: mobile device user interfaces

## Claims

1. A transportation control system comprising:
- at least one system server (1) for predicting congestion data of transportation infrastructure;
- a plurality of mobile devices (4a, 4b, 4c) connected to the system server (1) via a network (5),
wherein the system server (1) is configured to generate predicted congestion data of the transportation infrastructure based on previously received route selection data from the plurality of mobile devices (4a, 4b, 4c), when the system server (1) receives route selection data from a mobile device (4a, 4b, 4c) and is configured to provide updated predicted congestion data to the mobile devices (4a, 4b, 4c).

2. The transportation control system according to claim 1, wherein the system server (1) is configured to transmit route option data to the mobile devices (4a, 4b, 4c) based on the predicted congestion data and to transmit updated route option data to the mobile devices (4a, 4b, 4c) based on updated predicted congestion data.

3. The transportation control system according to at least one of the preceding claims, wherein the mobile devices (4a, 4b, 4c) are configured to select one transmitted route option as the route selection data.

4. The transportation control system according to at least one of the preceding claims, wherein the system server (1) is configured to predict the congestion data of a single transportation infrastructure in real time by counting the mobile devices (4a, 4b, 4c) selecting the route option including said transportation infrastructure, and dividing the total amount of counted mobile devices (4a, 4b, 4c) by a total capacity of said transportation infrastructure divided by a mobile device user ratio.

5. The transportation control system according to at least one of the preceding claims, wherein the system server (1) is configured to adapt the predicted congestion data by using position data of the mobile devices (4a, 4b, 4c).

6. The transportation control system according to at least one of the preceding claims further comprising:
- at least one traffic management system (2) connected to the at least one system server (1) via the network (5),
wherein the traffic management system (2) is configured to transmit data including information about transportation network, timetables and position data of transportation means to the system server (1).

7. The transportation control system according to claim 7, wherein the system server (1) is configured to calculate delay of the transportations means when receiving position data of the transportation means from the traffic management system (2) and update the previously received timetables considering the calculated delay of the transportation means.

8. The transportation control system according to at least one of the preceding claims further comprising:
- at least one reservation system (3) connected to the at least one system server (1) via the network (5),
wherein the reservation system (3) is configured to book itineraries including capacity of transportation infrastructure and transmit itinerary data to the system server (1).

9. The transportation control system according to claim 8,
wherein the system server (1) is configured to update the itinerary data based on the route selection data received from the mobile devices (4a, 4b, 4c) and transmit updated itinerary data to the reservation system (3).

10. The transportation control system according to at least one of the preceding claims 9 to 10, wherein the reservation system (3) is configured to rebook itineraries based on the updated itinerary data received from the system server (1).

11. A system server (1) for predicting congestion data of transportation infrastructure comprising:
- data receiving portion (112) configured to receive route selection data from a plurality of mobile devices (4a, 4b, 4c) via a network (5),
- data generating portion (111) configured to generate congestion data of the transportation infrastructure based on said route selection data,
- data sending portion (113) configured to send the congestion data and route option data to a plurality of mobile devices (4a, 4b, 4c),
wherein the data generating portion (111) is configured to generate the congestion data based on previously received route selection data from the plurality of mobile devices (4a, 4b, 4c) and the data sending portion (113) is configured to provide updated predicted congestion data to the mobile devices (4a, 4b, 4c).

12. The system server (1) according to claim 11, wherein
the data sending portion (113) is configured to transmit route option data to the mobile devices (4a, 4b, 4c) based on the congestion data predicted by the data generating portion (111) and to transmit updated route option data to the mobile devices (4a, 4b, 4c) based on updated congestion data predicted by the data generating portion (111).

13. The system server (1) according to claim 11 or 12, wherein
the data generating portion (111) is configured to predict the congestion data of a single transportation infrastructure in real time by counting the mobile devices (4a, 4b, 4c) selecting the route option including said transportation infrastructure, and dividing the total amount of counted mobile devices (4a, 4b, 4c) by a total capacity of said transportation infrastructure divided by a mobile device user ratio.

14. A transportation control method with the following steps:
- generating predicted congestion data of transportation infrastructure based on previous route selection data received from a plurality of mobile devices (4a, 4b, 4c) by at least one system server (1), when the system server (1) receives route selection data from a mobile device (4a, 4b, 4c); and
- providing updated predicted congestion data to the mobile devices (4a, 4b, 4c) by the system server (1).

15. The transportation control method according to claim 16, with the further steps:
- transmitting route option data to the mobile devices (4a, 4b, 4c) by the system server (1) based on the predicted congestion data;
- transmitting updated route option data based on the updated predicted congestion data to the mobile devices (4a, 4b, 4c); and
- selecting one transmitted route option as the route selection data by the mobile devices (4a, 4b, 4c).

## Amended claims

### Amended claims in accordance with Rule 137(2) EPC.

1. A transportation control system comprising:
- at least one system server (1) for predicting congestion data of transportation infrastructure;
- a plurality of mobile devices (4a, 4b, 4c) connected to the system server (1) via a network (5), configured to receive route option data from the system server (1), to select one received route option as route selection data and to transmit the route selection data to the system server (1),
wherein the system server (1) is configured to generate predicted congestion data of the transportation infrastructure based on previously received route selection data from the plurality of mobile devices (4a, 4b, 4c), when the system server (1) receives route selection data from a mobile device (4a, 4b, 4c) and is configured to provide updated predicted congestion data to the mobile devices (4a, 4b, 4c).

2. The transportation control system according to claim 1, wherein the system server (1) is configured to transmit route option data to the mobile devices (4a, 4b, 4c) based on the predicted congestion data and to transmit updated route option data to the mobile devices (4a, 4b, 4c) based on updated predicted congestion data.

3. The transportation control system according to at least one of the preceding claims, wherein the system server (1) is configured to predict the congestion data of a single transportation infrastructure in real time by countingthe mobile devices (4a, 4b, 4c) selecting the route option including said transportation infrastructure, and dividing the total amount of counted mobile devices (4a, 4b, 4c) by a total capacity of said transportation infrastructure divided by a mobile device user ratio.

4. The transportation control system according to at least one of the preceding claims, wherein the system server (1) is configured to adapt the predicted congestion data by using position data of the mobile devices (4a, 4b, 4c).

5. The transportation control system accordingto at least one of the preceding claims further comprising:
- at least one traffic management system (2) connected to the at least one system server (1) via the network (5),
wherein the traffic management system (2) is configured to transmit data including information about transportation network, timetables and position data of transportation means to the system server (1).

6. The transportation control system according to claim 5, wherein the system server (1) is configured to calculate delay of the transportations means when receiving position data of the transportation means from the traffic management system (2) and update the previously received timetables considering the calculated delay of the transportation means.

7. The transportation control system according to at least one of the preceding claims further comprising:
- at least one reservation system (3) connected to the at least one system server (1) via the network (5),
wherein the reservation system (3) is configured to book itineraries including capacity of transportation infrastructure and transmit itinerary data to the system server (1).

8. The transportation control system according to claim 7,
wherein the system server (1) is configured to update the itinerary data based on the route selection data received from the mobile devices (4a, 4b, 4c) and transmit updated itinerary data to the reservation system (3).

9. The transportation control system accordingto at least one of the preceding claims 7 to 8, wherein the reservation system (3) is configured to rebook itineraries based on the updated itinerary data received from the system server (1).

10. A system server (1) for predicting congestion data of transportation infrastructure comprising:
- data receiving portion (112) configured to receive route selection data from a plurality of mobile devices (4a, 4b, 4c) via a network (5),
- data generating portion (111) configured to generate congestion data of the transportation infrastructure based on said route selection data,
- data sending portion (113) configured to send the congestion data and route option data to a plurality of mobile devices (4a, 4b, 4c), which are configured to select one received route option as route selection data and to transmit the route selection data to the system server (1), wherein the data generating portion (111) is configured to generate the congestion data based on previously received route selection data from the plurality of mobile devices (4a, 4b, 4c), when the system server (1) receives route selection data from a mobile device (4a, 4b, 4c) and the data sending portion (113) is configured to provide updated predicted congestion data to the mobile devices (4a, 4b, 4c).

11. The system server (1) according to claim 10, wherein
the data sending portion (113) is configured to transmit route option data to the mobile devices (4a, 4b, 4c) based on the congestion data predicted by the data generating portion (111) and to transmit updated route option data to the mobile devices (4a, 4b, 4c) based on updated congestion data predicted by the data generating portion (111).

12. The system server (1) according to claim 10 or 11, wherein
the data generating portion (111) is configured to predict the congestion data of a single transportation infrastructure in real time by counting the mobile devices (4a, 4b, 4c) selecting the route option including said transportation infrastructure, and dividing the total amount of counted mobile devices (4a, 4b, 4c) by a total capacity of said transportation infrastructure divided by a mobile device user ratio.

13. A transportation control method with the following steps:
- receiving route option data from at least one system server (1), selecting one received route option as route selection data and transmitting the route selection data to the system server (1) by a plurality of mobile devices (4a, 4b, 4c),
- generating predicted congestion data of transportation infrastructure based on previous route selection data received from a plurality of mobile devices (4a, 4b, 4c) by the at least one system server (1), when the system server (1) receives route selection data from a mobile device (4a, 4b, 4c); and
- providing updated predicted congestion data to the mobile devices (4a, 4b, 4c) by the system server (1).

14. The transportation control method according to claim 13, with the further steps:
- transmitting route option data to the mobile devices (4a, 4b, 4c) by the system server (1) based on the predicted congestion data;
- transmitting updated route option data based on the updated predicted congestion data to the mobile devices (4a, 4b, 4c).
